(19) Europäisches Patentamt
European Patent Office
Office européen des brevets

(11) **EP 1 883 912 B1**

(12) **EUROPEAN PATENT SPECIFICATION**

(45) Date of publication and mention
of the grant of the patent:
**08.07.2015 Bulletin 2015/28**

(21) Application number: **06759645.2**

(22) Date of filing: **11.05.2006**

(51) Int Cl.:
*G08B 21/00* (2006.01)     *H01J 1/60* (2006.01)
*H05B 39/04* (2006.01)     *H05B 39/08* (2006.01)

(86) International application number:
**PCT/US2006/018377**

(87) International publication number:
**WO 2006/124558 (23.11.2006 Gazette 2006/47)**

(54) **STATUS INDICATOR CIRCUIT FOR A DIMMER SWITCH**

STATUSINDIKATORSCHALTUNG FÜR EINEN DIMMERSCHALTER

CIRCUIT INDICATEUR D'ETAT DE COMMUTATEUR A GRADUATION LUMINEUSE

(84) Designated Contracting States:
**AT BE BG CH CY CZ DE DK EE ES FI FR GB GR
HU IE IS IT LI LT LU LV MC NL PL PT RO SE SI
SK TR**

(30) Priority: **16.05.2005 US 681276 P**

(43) Date of publication of application:
**06.02.2008 Bulletin 2008/06**

(73) Proprietor: **Lutron Electronics Co., Inc.
Coopersburg, PA 18036 (US)**

(72) Inventor: **SALVESTRINI, Christopher James
Allentown, PA 18104 (US)**

(74) Representative: **Gleiss, Alf-Olav et al
Gleiss Große Schrell und Partner mbB
Patentanwälte Rechtsanwälte
Leitzstraße 45
70469 Stuttgart (DE)**

(56) References cited:
**US-A- 3 864 561     US-A- 4 091 276
US-A- 4 408 180     US-A- 5 017 837
US-A- 5 072 095     US-A- 5 191 265
US-A- 5 237 264     US-A- 5 248 919
US-A- 5 399 940**

EP 1 883 912 B1

**Description**

RELATED APPLICATIONS

This application is related to commonly-assigned U.S. Provisional Application Serial No. 60/681,276, filed May 16, 2005, having the same title as the present application, the entire disclosure of which is herein incorporated by reference.

FIELD OF THE INVENTION

The present invention relates to dimmers for controlling the intensity of a lighting load, specifically dimmers that include a status light that is off or illuminated to a dim level when the lighting load is not powered and is illuminated brightly when the lighting load is powered.

BACKGROUND OF THE INVENTION

A conventional two-wire dimmer has two connections: a "hot" connection to an alternating-current (AC) power supply and a "dimmed hot" connection to the lighting load. Standard dimmers use one or more semiconductor switches, such as triacs or field effect transistors (FETs), to control the current delivered to the lighting load and thus control the intensity of the light. The semiconductor switches are typically coupled between the hot and dimmed hot connections of the dimmer.

Standard wall-mounted dimmers include a user interface having a means for adjusting the intensity of the lighting load, such as a linear slider, a rotary knob, or a rocker switch. Some dimmers also include a button that allows for toggling of the lighting load from off (no power is conducted to the lighting load) to on (power is conducted to the lighting load to illuminate the lighting load). It is desirable to include a status indicator, such as a small lamp or light emitting diode (LED), on the user interface to indicate the status of the lighting load, i.e. on or off.

Many prior art dimmers have incorporated night-lights that are illuminated when the connected lighting load is off and are dimmed or not illuminated when the connected lighting load is on. One example of such a dimmer is disclosed in U.S. Patent No. 3,864, 561, issued Feb. 4, 1975, entitled DIMMER SWITCH WITH ILLUMINATED KNOB. These dimmers include a neon lamp, or an equivalent light source, and a series current-limiting impedance. The neon lamp and the impedance are connected in parallel with the semiconductor switch such that a voltage is developed across the neon lamp when the semiconductor switch is non-conducting. Thus, the neon lamp will have an intensity that is inversely proportional to the intensity of the connected lighting load. However, even though this convention of illuminating the night-light provides an indication of the status of the connected lighting load, the convention is opposite a more common expectation that the status lamp should be on when the connected lighting load is on and off when the load is off.

U.S. Patent No. 5,017,837, issued on May 21, 1991, entitled INDICATOR LAMP SYSTEM, discloses a load control system that has an indicator lamp that provides a dim light when the load power is off and provides a brighter light when the load power is on. The dim light that is provided when the lighting load is off is bright enough to be seen in a darkened room. However, this system requires many electrical components in addition to the semiconductor switch and related control circuitry for controlling the current through the connected lighting load. This leads to higher costs and limited space on the printed circuit board (PCB) of the dimmer.

Some prior art dimmers are considered "smart" dimmers since they include a microcontroller or other processing means to allow an advanced set of control features and feedback options to the end user. An example of a smart dimmer is disclosed in commonly-assigned U.S. Pat. No. 5,248,919, issued on Sept. 28, 1993, entitled LIGHTING CONTROL DEVICE, which is herein incorporated by reference in its entirety. Smart dimmers typically include a plurality of actuators for receipt of user inputs and a plurality of LEDs for feedback to the user. In order to provide a direct-current (DC) voltage to power the microprocessor and the LEDs, the dimmer includes a power supply. In a two-wire smart dimmer, the power supply can only draw a small current through the lighting load when the semiconductor switch is non-conducting. In order to provide the LED feedback to the user, the smart dimmer is required to include the microprocessor and the power supply, which increase the cost and design requirements of the dimmer.

US Patent US 5 072 095 discloses a load control device according to the preamble of claim 1.

Thus, there exists a need for a simple status indicator circuit that does not require a power supply or many other components and operates in a manner in which the status indicator is off or at a dim level when the lighting load is off and at a bright level when the load is on.

SUMMARY OF THE INVENTION

According to the present invention, a load control device for controlling the amount of power delivered to an electrical load from an AC power source comprises a controllably conductive device adapted to be coupled between the AC power source and the electrical load to control the amount of power delivered to the electrical load. A timing circuit is adapted to be coupled between the AC power supply and the lighting load and has an output for providing a timing signal. A triggering circuit is operatively coupled between the output of the timing circuit and a control input of the controllably conductive device. The triggering circuit is operable to conduct a control current through the control input in response to the timing signal. The dimmer further comprises a status indicator circuit operable to conduct the control current and provide a status indication in response thereto.

According to the present invention, the status indicator circuit is coupled in series electrical connection with a capacitor of the timing circuit such that the status indicator is illuminated to a dim level when the electrical load is not powered and the status indicator is illuminated to a bright level when the electrical load is powered.

According to a circuit, the status indicator circuit is coupled in series electrical connection with the control input of the semiconductor switch such that the status indicator is not illuminated when the electrical load is not powered and the status indicator is illuminated when the electrical load is powered.

According to another embodiment of the present invention, a load control device for controlling the amount of power delivered to an electrical load from an AC power source comprises a bidirectional semiconductor switch, a timing circuit, a rectifier bridge, a triggering circuit, an optocoupler, and an illuminable status indicator. The bidirectional semiconductor switch is adapted to be coupled between the AC power source and the electrical load. The timing circuit is adapted to be coupled between the AC power source and the electrical load and has an output for providing a timing signal. The rectifier bridge having AC terminals coupled to the timing circuit for receipt of the timing signal and DC terminals. The triggering circuit is coupled in series electrical connection with the DC terminals of the rectifier bridge and is characterized by a break-over voltage. The triggering circuit is operable to conduct a control current when a voltage across the triggering circuit exceeds the break-over voltage of the triggering circuit. The optocoupler has an input coupled in series electrical connection with the triggering circuit and an output coupled to the control input of the semiconductor switch. When the triggering circuit and the input of the optocoupler conduct the control current, the output of the optocoupler is operable to conduct a gate current through a control input of the semiconductor switch, thereby rendering the semiconductor switch conductive. The illuminable status indicator is coupled in series electrical connection with the triggering circuit and the input of the optocoupler. The status indicator is illuminated when the electrical load is powered and not illuminated when the electrical load is not powered. Preferably, the dimmer further comprises a current limit circuit coupled in series electrical connection with the triggering circuit and the input of the optocoupler, the current limit circuit operable to limit the magnitude of the control current.

Alternatively, the illuminable status indicator may be coupled in series electrical connection with the triggering circuit and in parallel electrical connection with the input of the optocoupler. Accordingly, the current limit circuit has a first current limit portion coupled in series electrical connection with the input of the optocoupler for limiting the magnitude of the current through the input, and a second current limit portion coupled in series electrical connection with the illuminable status indicator for limiting the magnitude of the current through the status indicator.

In addition, the present invention further provides a method of providing an illuminable status indicator on a load control device for controlling the amount of power delivered to an electrical load from an AC power source. The method comprises the steps of: (1) coupling a controllably conductive device in series electrical connection between the AC power source and the electrical load for controlling the power delivered to the electrical load; (2) conducting a charging current through a timing capacitor; (3) conducting a control current through a triggering device in response to the step of conducting a charging current; and (4) conducting a gate current through a control input of the controllably conductive device in response to the step of conducting a control current. The illuminable status indicator is operable to illuminate in response to the step of conducting the control current. Preferably, the illuminable status indicator is also operable to illuminate in response to the step of conducting the charging current.

BRIEF DESCRIPTION OF THE DRAWINGS

Fig. 1 shows the user interface of a dimmer having a status indicator;

Fig. 2 shows a schematic diagram of a two-wire dimmer including a status LED

Fig. 3 shows a schematic diagram of a two-wire dimmer including a status LED

Fig. 4 shows a schematic diagram of a two-wire dimmer including a status LED

Fig. 5 shows a schematic diagram of a two-wire dimmer including a status LED

Fig. 6 shows a schematic diagram of a two-wire dimmer including a status LED

DETAILED DESCRIPTION OF THE INVENTION

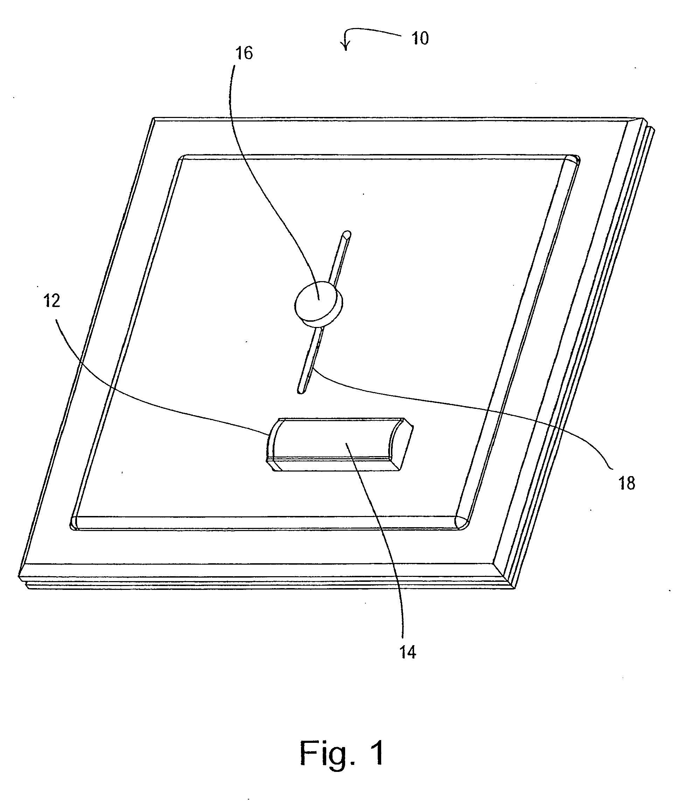

Fig. 1 shows the user interface of a dimmer 10 having a status indicator 12. The status indicator 12 is provided as part of a button 14 of the dimmer 10 and is made of a transparent piece of plastic in order to conduct the light from a light emitting diode (LED) inside the dimmer to the user interface of the dimmer. The button 14 controls a mechanical switch inside the dimmer 10 such that an actuation of the button 14 will toggle the connected lighting load on and off. A knob 16 is provided along a slot 18 to allow for adjustment of the intensity of the connected lighting load. Moving the knob 16 to the top of the slot 18 will increase the intensity of the lighting load and moving the knob 16 to the bottom of the slot 18 will decrease the intensity of the lighting load.

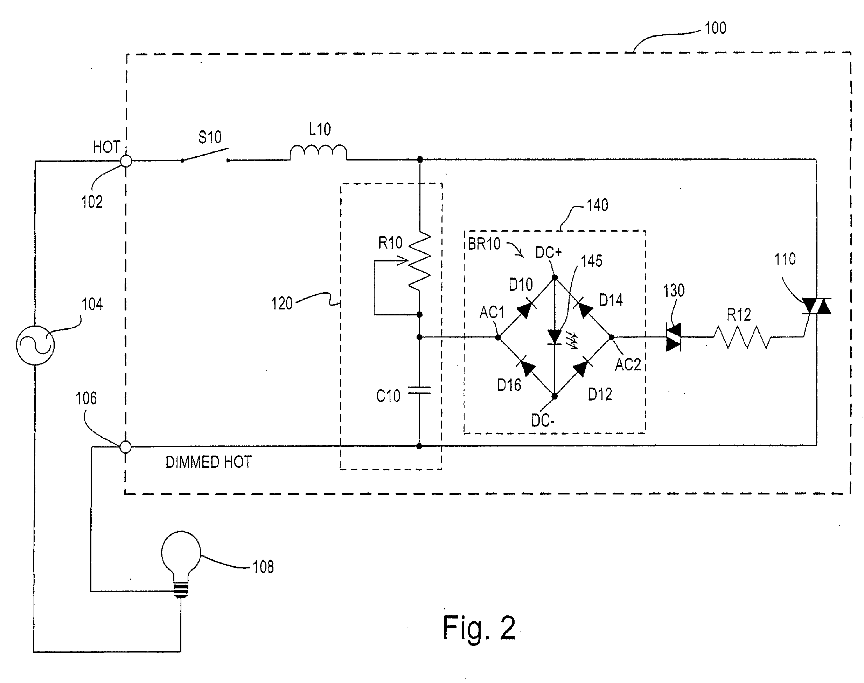

Fig. 2 shows a two-wire dimmer 100 including a status LED 145. The dimmer 100 has two connections: a HOT terminal 102 to an alternating-current (AC) power source 104 and a DIMMED HOT connection 106 to a lighting load 108. A mechanical switch S10 is in series with the HOT terminal and is toggled between an open and a closed state by actuation of the button 14 of the user interface. When the switch S10 is open, the AC power source 104 is completely disconnected from the lighting load 108, and thus the lighting load is not illuminated. The dimmer 100 also employs an inductor L10 for input noise/EMI filtering.

The dimmer 100 employs a semiconductor switch, for example, a triac 110, to control the amount of current delivered to the lighting load 108 and thus control the intensity of the lighting load. The triac 110 is coupled between the HOT terminal 102 and the DIMMED HOT terminal 106 of the dimmer 100 and provides a dimmed-hot voltage at the DIMMED HOT terminal to power the lighting load 108. The dimmed-hot voltage comprises a phase-cut AC voltage waveform, as well known to those of skill in the art, wherein current is only provided to the lamp load after a certain phase angle of each half-cycle of the AC waveform.

A timing circuit 120 comprises a resistor-capacitor (RC) circuit connected between the inductor L10 and the DIMMED HOT terminal 106 having a potentiometer R10 and a capacitor C10. The timing circuit 120 controls a firing voltage, which is the voltage across capacitor C10, for turning on the triac 110 after a selected phase angle in each half-cycle. The charging time of the capacitor C10 is varied in response to a change in the resistance of potentiometer R10 to change the selected phase angle at which the triac 110 begins conducting.

A diac 130 is in series with the control input, or gate, of the triac 110 and is employed as a triggering device. The diac 130 has a break-over voltage (for example 30V), and will pass current to and from the triac gate only when the firing voltage on the capacitor C10 exceeds the break-over voltage of the diac. Current will flow into the gate of the triac 110 during the positive half-cycles and out of the gate of the triac during the negative half-cycles. A current limiting resistor R12 limits the current into and out of the gate of the triac 110 and balances the gate current in both half-cycles.

The dimmer 100 also comprises a status LED circuit 140, which is connected in series with the gate of the triac 110. The status LED circuit 140 includes the status LED 145 inside a rectifier bridge BR10, which comprises diodes D10, D12, D14, and D16. A first pair of AC terminals AC1, AC2, of the bridge BR10 are connected in series electrical connection with the diac 130, the current limiting resistor R12, and the gate of the triac 110. The anode of the LED 145 is connected to the positive output DC terminal DC+ of the bridge BR10 and the cathode of the LED is connected to the negative output DC terminal DC- of the bridge to ensure that current flows in the proper direction through the LED during both half-cycles. During the positive half-cycle, current flows through the diode D10, the LED 145, and the diode D12. For the negative half cycle, current flows through diode D14, the LED 145, and the diode D16.

When the switch S10 is open, the AC power source 104 is disconnected from the lighting load 108 and the rest of the circuitry of the dimmer 100. Thus, the status LED 145 does not illuminate when the lighting load 108 is off. However, when the switch S10 is closed, the lighting load 108 will be powered and the status LED 145 will be illuminated by the gate current of the triac 110.

To provide a desirable aesthetic for the user interface of the dimmer 100, the status LED should be lit at a constant intensity when the lighting load 108 is on. In order for the status LED 145 to be illuminated at a constant intensity, the average current through the LED must be substantially constant. Because the current limiting resistor R12 limits and balances the current through the LED 145 during both half-cycles, the average current through and the intensity of the LED 145 will be substantially constant. Preferably, the magnitude of the average current through the LED 145 in Fig. 1 is approximately 1.5mA.

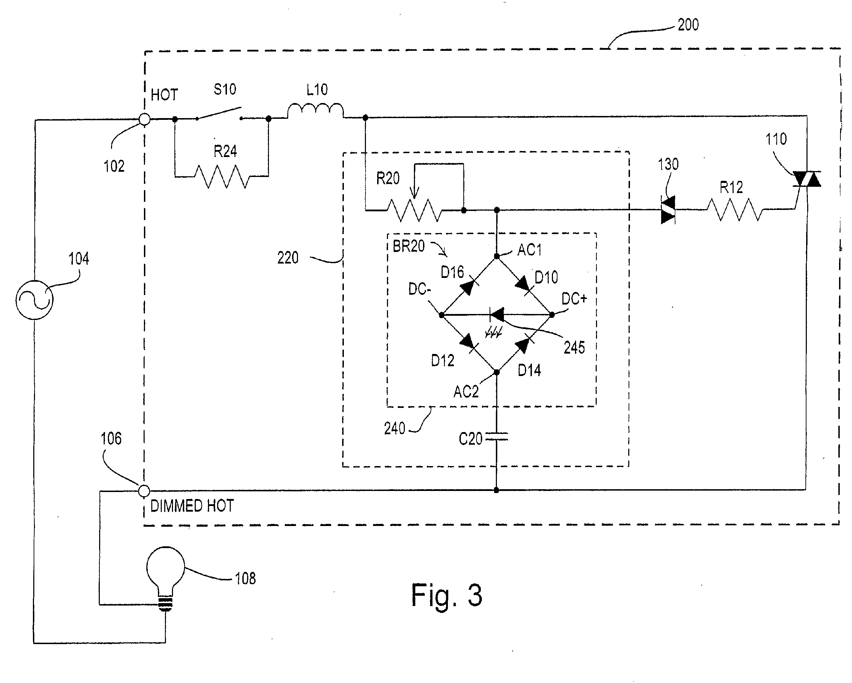

Fig. 3 shows a two-wire dimmer 200 including a status LED 245 according to the present invention. In this embodiment, a status LED circuit 240 is in series with the firing capacitor C20 of a timing circuit 220. The status LED 245 is included inside a rectifier bridge BR20 to ensure that current flows through the LED in the proper direction in both half-cycles. When the capacitor C20 is charging during each half-cycle, current flows through a potentiometer R20, the status LED 245, and the capacitor C20. When the voltage at the node AC1 of the bridge BR20 exceeds the break-over voltage of the diac 130, the capacitor C20 discharges through the status LED 245. Thus, the status LED 245 of the second embodiment conducts current when the capacitor C20 is charging and discharging. The status LED 245 conducts four pulses of current during each line cycle of the AC power source 104. The potentiometer R20 preferably has a maximum resistance of 100kΩ. The capacitance of the capacitor C20 is preferably 0.15μF.

The average charging current of the capacitor C20 is substantially constant independent of the firing angle of the dimmer 200 (i.e. the charging time of the capacitor). Each half-cycle, the voltage, $V_C$, on the capacitor C20 reaches a maximum value that is approximately the same as the break-over voltage of the diac 130. Thus, the charge, $Q_C$, that accumulates on the capacitor C20 is substantially the same each half-cycle, since

$$Q_C = C * V_C, \qquad \text{(Equation 1)}$$

where C is the capacitance of the capacitor C20. Note that the charge accumulated on the capacitor C20 is equal to the integral of the charging current with respect to time, i.e.,

$$Q_C = \int i_C(t) \, dt, \qquad \text{(Equation 2)}$$

and that the average charging current, $I_{C\text{-}AV}$, is equal to the integral of the charging current with respect to time divided by the period of integration, i.e.,

$$I_{C\text{-}AV} = (1/T) * \int i_C(t) \, dt. \qquad \text{(Equation 3)}$$

where T is the period of the line frequency (i.e., 50 Hz or 60 Hz). Thus, it can be determined that the average charging current, $I_{C\text{-}AV}$, of the capacitor C20 is substantially constant since the charge, $Q_C$, that accumulates is substantially constant from one half-cycle to the next.

Since the average charging current and the average gate current are both substantially constant, the total current through, and the intensity of, the status LED 245 are also substantially constant. Preferably, the magnitude of the average charging current is approximately 0.2 mA, thus, the magnitude of the total average current through the status LED 245 of Fig. 3 is approximately 1.7 mA.

Since the status LED circuit 240 is provided in series with the capacitor C20, the status LED 245 can be set to a dim level when the lighting load 108 is off. A resistor R24 is provided in parallel with the switch S10 in the dimmer 200. When the switch S10 is open, the resistor R24 provides a path to charge the capacitor C20 of the timing circuit 220. The resistor preferably has a large enough value (for example, 440kΩ) such that the capacitor C20 is unable to charge to the break-over voltage of the diac 130 each half-cycle. Thus, the status LED 245 will be illuminated due to the charging current of the capacitor C20 only. Since the charging current is substantially smaller than the gate current of the triac 110, the status LED will illuminate to a dim level when the lighting load 108 is off. The dim level is preferably brilliant enough that someone is able to view the status indicator 12 of the user interface in a darkened room, yet dim enough to be distinguishable over the bright level when the lighting load 108 is on.

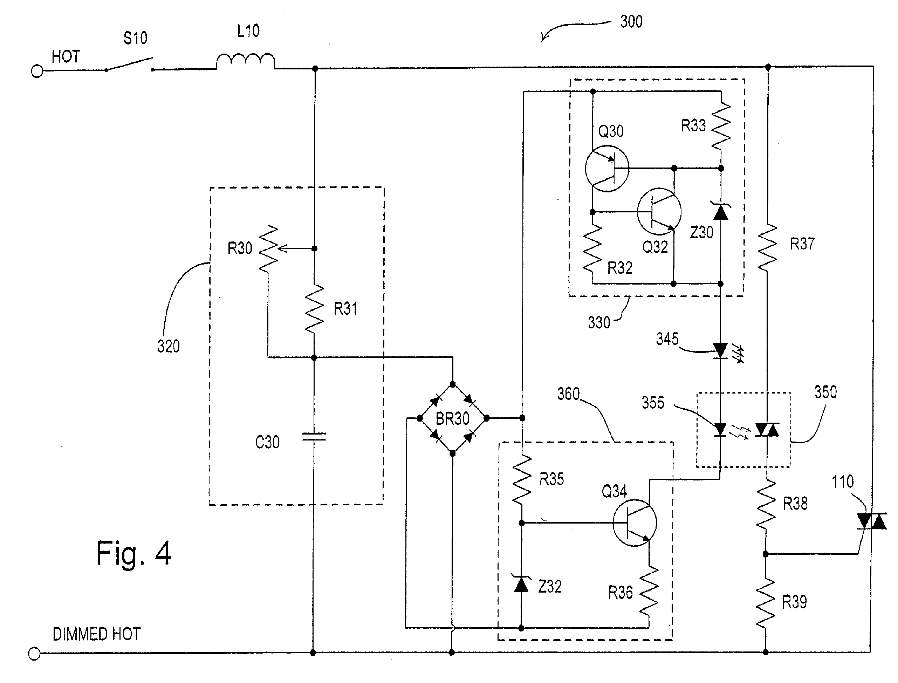

Fig. 4 shows a two-wire dimmer 300 including a status LED 345. The dimmer 300 includes a timing circuit 320 comprising a potentiometer R30, a calibrating resistor R31, and a capacitor C30 and operates in a similar manner to the timing circuit of the previous two embodiments.

The dimmer 300 also includes a triggering circuit 330, which comprises two transistors Q30, Q32, two resistors R32, R33, and a zener diode Z30. The triggering circuit 330 operates in a similar fashion as the diac of the circuits of the previous two embodiments. When the voltage across the triggering circuit 330 exceeds the break-over voltage of the zener diode Z30, the zener diode begins conducting current. The break-over voltage of the zener diode Z30 is preferably 30 V. The transistor Q30 begins conducting as the voltage across the resistor R33 reaches the required base-emitter voltage of the transistor Q30. A voltage is then produced across the resistor R32, which causes the transistor Q32 to begin conducting. This essentially shorts out the zener diode Z30 such that the zener diode stops conducting and the voltage across the triggering circuit 330 falls to approximately zero. A pulse of current through the triggering circuit 330 flows from the capacitor C30 and through a photodiode 355 of an optocoupler 350, which allows current to flow into the gate of the triac 110 in the positive half-cycles and out of the gate in the negative half-cycles.

The dimmer 300 further includes a current-limit circuit 360, comprising a transistor Q34, two resistors R35, R36 and a zener diode Z32. After the triggering circuit 330 begins conducting current, the current will flow through the photodiode 355 of the optocoupler 350, the transistor Q34, and the resistor R36. When the voltage across the resistor R36 plus the base-emitter voltage of the transistor Q34 exceeds the break-over voltage of the zener diode Z32, the transistor Q34 will enter the linear region and limit the current flow out of the emitter of the transistor. The resistance of the resistor R36 is preferably 470Ω and the break-over voltage of the zener diode Z32 is preferably 3.3V. These values set the current limit of the current-limit circuit 360 to approximately 6mA.

The status LED 345 is provided in series with the triggering circuit 330, the photodiode 355 of the optocoupler 350, and the current-limit circuit 360. Since the current-limit circuit 360 will limit and balance the current through the status LED 345 from one half-cycle to the next, the average current through and the intensity of the status LED will remain substantially constant. Because the circuitry of the dimmer 300 will not be powered when the switch S1 is open, the status LED 345 will not be illuminated when the lighting load is off.

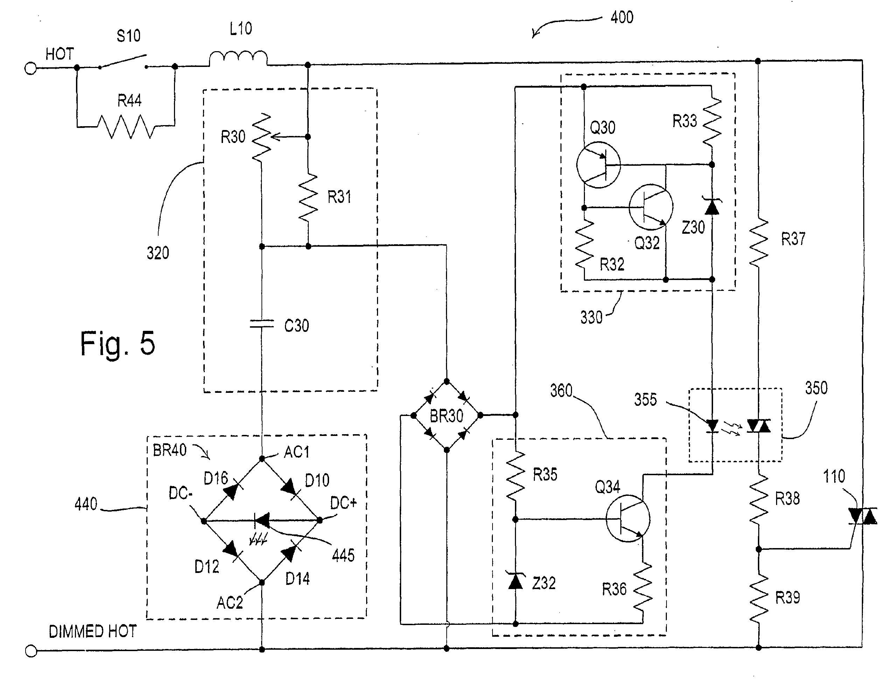

Fig. 5 shows a two-wire dimmer 400 including a status LED 445. Similar to the second embodiment, a status LED circuit 440 is in series with the capacitor C30 of the timing circuit 320. The status LED 445 is included inside a rectifier bridge BR40 to ensure that current flows through the LED in both half-cycles. A resistor R44 is provided in parallel with the switch S1 to allow the status LED 445 to illuminate to a dim level when the lighting load is off.

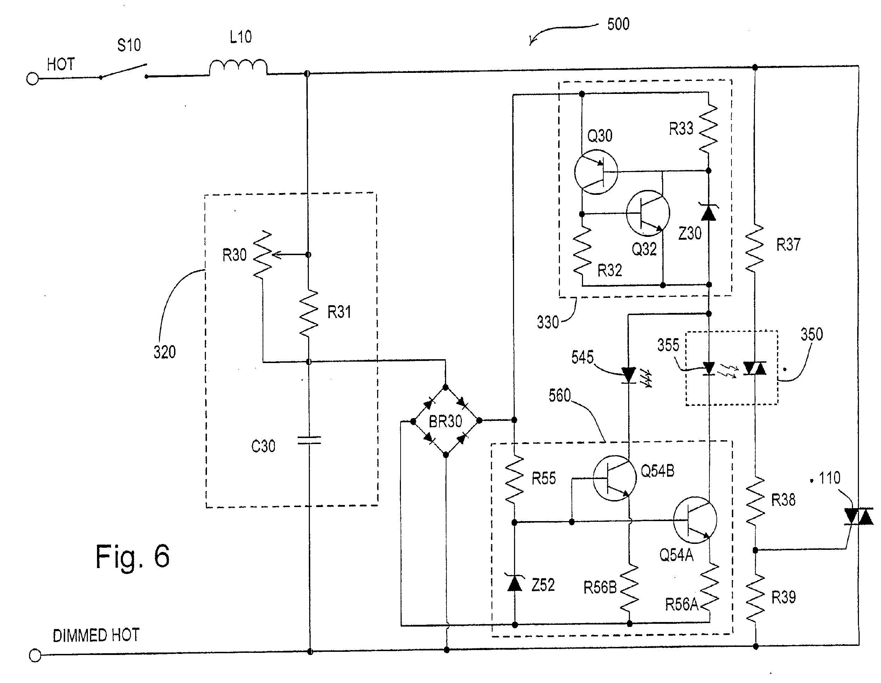

Fig. 6 shows a two-wire dimmer 500 including a status LED 545. The dimmer 500 incorporates a new current-limit circuit 560 that comprises two transistors Q54A, Q54B, three resistors R55, R56A, R56B, and a zener diode Z52. The photodiode 355 of the optocoupler 350 is in series with a first current limit portion that includes the first transistor Q54A and the resistor R56A. The first current limit portion operates to limit the current through the photodiode 355. The status LED 545 is in series with a second current limit portion, i.e., the second transistor Q54B and the resistor R56B, which operates to limit the current through the status LED. Accordingly, the current-limit circuit 560 includes the two current limit portions to allows for two separate current limits for the photodiode 355 and the status LED 545 as set by the resistances of resistors R56A and R56B, respectively. The break-over voltage of the zener diode Z52 is preferably 3.3V.

**Claims**

1. A load control device for controlling the amount of power delivered to an electrical load from an AC power source, the load control device comprising:

   a controllably conductive device (110) adapted to be coupled between the AC power source and the electrical load to control the amount of power delivered to the electrical load, the controllably conductive device having a control input; a timing circuit (220; 320) adapted to be coupled between the AC power supply and a lighting load (108), the timing circuit having an output for providing a timing signal; a triggering circuit (130; 330) operatively coupled between the output of the timing circuit and the control input of the controllably conductive device, the triggering circuit operable to conduct a control current through the control input in response to the timing signal; and a status indicator circuit (140; 240; 440), wherein the status indicator circuit is operable to conduct the control current and provide a status indication in response thereto, and wherein the status indicator circuit comprises an illuminable status indicator (145; 245; 445) wherein the timing circuit comprises a timing resistor (R20; R30) coupled in series electrical connection with a timing capacitor (C20; C30), the series combination of the timing resistor and the timing capacitor coupled in parallel electrical connection with the controllably conductive device (110), the output of the timing circuit (220; 320) provided at the junction of the timing resistor and the timing capacitor;
   **characterized in that**
   the status indicator circuit (140; 240; 440) is coupled in series electrical connection with the timing capacitor.

2. The load control device of claim 1, wherein the status indicator (145; 245; 445) is illuminated when the load control device is providing power to the load and the status indicator is illuminated to a dim level when the load control device is not providing power to the load.

3. The load control device of claim 2, wherein the electrical load comprises a lighting load (108); and wherein the status indicator (145; 245; 445) is illuminated when the lighting load is illuminated and the status indicator (145; 245; 445) is illuminated to a dim level when the lighting load is not illuminated.

4. The load control device of claim 2, further comprising: a mechanical switch (S10) coupled in series electrical connection with the controllably conductive device; and a resistor (R24; R44) coupled in parallel electrical connection with the mechanical switch for allowing the status indicator to be illuminated to a dim level when the mechanical switch is open.

5. The load control device of claim 1, wherein the status indicator (145; 245; 445) is illuminated when the load control device is providing power to the load, and the status indicator is not illuminated when the load control device is not providing power to the load.

**6.** The load control device of claim 5, wherein the electrical load comprises a lighting load (108); and wherein the status indicator is illuminated when the lighting load is illuminated, and the status indicator is not illuminated when the lighting load (108) is not illuminated.

**7.** The load control device of claim 1, wherein the status indicator circuit further comprises a rectifier bridge (BR20) having AC terminals coupled in series electrical connection with the timing capacitor (C20; C30), and DC terminals coupled in series electrical connection with the illuminable status indicator, such that the status indicator is operable to illuminate when the timing capacitor is charging and discharging.

**8.** The load control device of claim 7, wherein the status indicator is operable to conduct four pulses of current during each line cycle of the AC power source.

**9.** The load control device of claim 1, wherein the controllably conductive device comprises a bidirectional semiconductor switch (110).

**10.** The load control device of claim 9, wherein the bidirectional semiconductor switch (110) comprises a triac.

**11.** The load control device of claim 10, further comprising: a rectifier bridge (BR20) having AC terminals coupled to the timing circuit (220; 320) for receipt of the timing signal and DC terminals coupled in series electrical connection with the triggering circuit (130; 330); and an optocoupler (350) having an input (355) coupled in series electrical connection with the triggering circuit (130; 330) and an output coupled to the control input of the triac, such that when the triggering circuit and the input of the optocoupler (350) conduct the control current, the output of the optocoupler is operable to conduct a gate current through the control input of the triac, thereby rendering the triac conductive.

**12.** The load control device of claim 11, wherein the status indicator circuit (140; 240; 440) further comprises a second rectifier bridge (BR40) having AC terminals coupled in series electrical connection with the timing capacitor, and DC terminals coupled in series electrical connection with the illuminable status indicator, such that the status indicator is operable to illuminate when the timing capacitor is charging and discharging.

**13.** The load control device of claim 12, further comprising: a current limit circuit (360; 560) coupled in series electrical connection with the triggering circuit (130; 330) and the input of the optocoupler (350), the current limit circuit operable to limit the magnitude of the control current.

**14.** The load control device of claim 2, wherein the illuminable status indicator comprises a light-emitting diode.

**15.** A method of providing an illuminable status indicator on a load control device for controlling the amount of power delivered to an electrical load from an AC power source, the method comprising the steps of: coupling a controllably conductive device (110) in series electrical connection between the AC power source and the electrical load for controlling the power delivered to the electrical load; conducting a charging current through a timing capacitor; conducting a control current through a triggering device (130; 330) in response to the step of conducting a charging current; and conducting a gate current through a control input of the controllably conductive device in response to the step of conducting a control current providing an illuminable status indicator (145; 245; 445); wherein the illuminable status indicator is operable to illuminate in response to the step of conducting the control current, **characterized in that** the step of conducting a control current comprises conducting the control current through the timing capacitor (C20; C30), the triggering device (130; 330), and the illuminable status indicator (145; 245; 445).

**16.** The method of claim 15, wherein the step of conducting a charging current comprises conducting the charging current through the timing capacitor (C20; C30) and the illuminable status indicator; wherein the illuminable status indicator (145; 245; 445) is operable to illuminate in response to the step of conducting a charging current.

**17.** The method of claim 16, wherein the charging current has a first magnitude when the electrical load is illuminated and a second magnitude when the electrical load is not illuminated.

**18.** The method of claim 17, wherein the first magnitude is substantially greater than the second magnitude, such that the illuminable status indicator (145; 245; 445) is operable to illuminate to a greater level when the electrical load is illuminated than when the electrical load is not illuminated, wherein the second magnitude is greater than zero amps.

**19.** The method of claim 18, wherein the second magnitude is substantially zero amps.

**Patentansprüche**

**1.** Laststeuervorrichtung zum Steuern der Menge an Leistung, die einer elektrischen Last von einer Wechselstromquelle zugeführt wird, wobei die Laststeuervorrichtung umfasst:

eine steuerbar leitfähige Vorrichtung (110), die dafür ausgelegt ist, zwischen die Wechselstromquelle und die elektrische Last geschaltet zu werden, um die Menge der der elektrischen Last zugeführten Leistung zu steuern, wobei die steuerbar leitfähige Vorrichtung einen Steuereingang; eine Zeitschaltung (220; 320), die dafür ausgelegt ist, zwischen die Wechselstromquelle und eine Beleuchtungslast (108) geschaltet zu werden, wobei die Zeitschaltung einen Ausgang zum Bereitstellen eines Zeitgebersignals aufweist; eine Auslöseschaltung (130; 330), die zwischen den Ausgang der Zeitschaltung und den Steuereingang der steuerbar leitfähigen Vorrichtung funktional gekoppelt ist, wobei die Auslöseschaltung betreibbar ist, um in Reaktion auf das Zeitgebersignal einen Steuerstrom durch den Steuereingang zu leiten; und eine Zustandsanzeigeschaltung (140; 240; 440), wobei die Zustandsanzeigeschaltung dafür betreibbar ist, den Steuerstrom zu leiten und in Reaktion darauf eine Zustandsanzeige bereitzustellen, und wobei die Zustandsanzeigeschaltung eine beleuchtbare Zustandsanzeige (145; 245; 445) umfasst, aufweist, wobei die Zeitschaltung einen Zeitgeberwiderstand (R20; R30) umfasst, der mit einem Zeitgeberkondensator (C20; C30) elektrisch in Reihe geschaltet ist, wobei die Reihenschaltung des Zeitgeberwiderstands und des Zeitgeberkondensators mit der steuerbar leitfähigen Vorrichtung (110) elektrisch parallel geschaltet ist, wobei der Ausgang der Zeitschaltung (220; 320) an der Verbindung des Zeitgeberwiderstands und des Zeitgeberkondensators vorgesehen ist; **dadurch gekennzeichnet, dass** die Zustandsanzeigeschaltung (140; 240; 440) mit dem Zeitgeberkondensator elektrisch in Reihe geschaltet ist.

**2.** Laststeuervorrichtung nach Anspruch 1, wobei die Zustandsanzeige (145; 245, 445) beleuchtet ist, wenn die Laststeuervorrichtung Leistung für die Last bereitstellt, und wobei die Zustandsanzeige auf einem Dimmpegel beleuchtet ist, wenn die Laststeuervorrichtung keine Leistung für die Last bereitstellt.

**3.** Laststeuervorrichtung nach Anspruch 2, wobei die elektrische Last eine Beleuchtungslast (108) umfasst; und wobei die Zustandsanzeige (145; 245; 445) beleuchtet ist, wenn die Beleuchtungslast beleuchtet ist, und wobei die Zustandsanzeige (145; 245; 445) auf einem Dimmpegel beleuchtet ist, wenn die Beleuchtungslast nicht beleuchtet ist.

**4.** Laststeuervorrichtung nach Anspruch 2, die ferner umfasst: einen mechanischen Schalter (S10), der mit der steuerbar leitfähigen Vorrichtung elektrisch in Reihe geschaltet ist; und einen Widerstand (R24; R44), der zu dem mechanischen Schalter elektrisch parallel geschaltet ist, um zu ermöglichen, dass die Zustandsanzeige auf einem Dimmpegel beleuchtet ist, wenn der mechanische Schalter offen ist.

**5.** Laststeuervorrichtung nach Anspruch 1, wobei die Zustandsanzeige (145; 245; 445) beleuchtet ist, wenn die Laststeuervorrichtung Leistung für die Last bereitstellt, und wobei die Zustandsanzeige nicht beleuchtet ist, wenn die Laststeuervorrichtung keine Leistung für die Last bereitstellt.

**6.** Laststeuervorrichtung nach Anspruch 5, wobei die elektrische Last eine Beleuchtungslast (108) umfasst; und wobei die Zustandsanzeige beleuchtet ist, wenn die Beleuchtungslast beleuchtet ist, und wobei die Zustandsanzeige nicht beleuchtet ist, wenn die Beleuchtungslast (108) nicht beleuchtet ist.

**7.** Laststeuervorrichtung nach Anspruch 1, wobei die Zustandsanzeigeschaltung ferner eine Gleichrichterbrücke (BR20) umfasst, die Wechselstromanschlüsse, die mit dem Zeitgeberkondensator (C20; C30) elektrisch in Reihe geschaltet sind, und Gleichstromanschlüsse, die mit der beleuchtbaren Zustandsanzeige elektrisch in Reihe geschaltet sind, aufweist, sodass die Zustandsanzeige zum Beleuchten betreibbar ist, wenn sich der Zeitgeberkondensator lädt und entlädt.

**8.** Laststeuervorrichtung nach Anspruch 7, wobei die Zustandsanzeige zum Leiten von vier Stromimpulsen während jedes Leitungszyklus der Wechselstromquelle betreibbar ist.

**9.** Laststeuervorrichtung nach Anspruch 1, wobei die steuerbar leitfähige Vorrichtung einen bidirektionalen Halbleiterschalter (110) umfasst.

**10.** Laststeuervorrichtung nach Anspruch 9, wobei der bidirektionale Halbleiterschalter (110) einen Triac umfasst.

**11.** Laststeuervorrichtung nach Anspruch 10, die ferner umfasst: eine Gleichrichterbrücke (BR20), die Wechselstromanschlüsse, die für den Empfang des Zeitgebersignals mit der Zeitschaltung (220; 320) gekoppelt sind, und Gleichstromanschlüsse, die mit der Auslöseschaltung (130; 330) elektrisch in Reihe geschaltet sind, aufweist; und einen Optokoppler (350), der einen Eingang (355), der mit der Auslöseschaltung (130; 330) elektrisch in Reihe geschaltet ist, und einen Ausgang, der mit dem Steuereingang des Triac gekoppelt ist, aufweist, sodass der Ausgang des Optokopplers dafür betreibbar ist, einen Gate-Strom über den Steuereingang des Triac zu leiten und dadurch den Triac leitfähig zu machen, wenn die Auslöseschaltung und der Eingang des Optokopplers (350) den Steuerstrom leiten.

**12.** Laststeuervorrichtung nach Anspruch 11, wobei die Zustandsanzeigeschaltung (140; 240; 440) ferner eine zweite Gleichrichterbrücke (BR40) umfasst, die Wechselstromanschlüsse, die mit dem Zeitgeberkondensator elektrisch in Reihe geschaltet sind, und Gleichstromanschlüsse, die mit der beleuchtbaren Zustandsanzeige elektrisch in Reihe geschaltet sind, aufweist, sodass die Zustandsanzeige zum Beleuchten, wenn der Zeitgeberkondensator lädt und entlädt, betreibbar ist.

**13.** Laststeuervorrichtung nach Anspruch 12, die ferner umfasst: eine Strombegrenzungsschaltung (360; 560), die mit der Auslöseschaltung (130; 330) und mit dem Eingang des Optokopplers (350) elektrisch in Reihe geschaltet ist, wobei die Strombegrenzungsschaltung zum Begrenzen der Größe des Steuerstroms betreibbar ist.

**14.** Laststeuervorrichtung nach Anspruch 2, wobei die beleuchtbare Zustandsanzeige eine Lichtemitterdiode umfasst.

**15.** Verfahren zum Bereitstellen einer beleuchtbaren Zustandsanzeige an einer Laststeuervorrichtung zum Steuern der Menge an Leistung, die von einer Wechselstromquelle einer elektrischen Last zugeführt wird, wobei das Verfahren die folgenden Schritte umfasst: elektrisch in Reihe Schalten einer steuerbar leitfähigen Vorrichtung (110) zwischen der Wechselstromquelle und der elektrischen Last zum Steuern der der elektrischen Last zugeführten Leistung; Leiten eines Ladestroms durch einen Zeitgeberkondensator; Leiten eines Steuerstroms durch eine Auslösevorrichtung (130; 330) in Ansprechen auf den Schritt des Leitens eines Ladestroms; und Leiten eines Gate-Stroms durch einen Steuereingang der steuerbar leitfähigen Vorrichtung in Ansprechen auf den Schritt des Leitens eines Steuerstroms, was eine beleuchtbare Zustandsanzeige (145; 245; 445) bereitstellt; wobei die beleuchtbare Zustandsanzeige zum Beleuchten in Ansprechen auf den Schritt des Leitens des Steuerstroms betreibbar ist, **dadurch gekennzeichnet, dass** der Schritt des Leitens eines Steuerstroms das Leiten des Steuerstroms durch den Zeitgeberkondensator (C20; C30), durch die Auslösevorrichtung (130; 330) und durch die beleuchtbare Zustandsanzeige (145; 245; 445) umfasst.

**16.** Verfahren nach Anspruch 15, wobei der Schritt des Leitens eines Ladestroms das Leiten des Ladestroms durch den Zeitgeberkondensator (C20; C30) und durch die beleuchtbare Zustandsanzeige umfasst; wobei die beleuchtbare Zustandsanzeige (145; 245; 445) zum Beleuchten in Ansprechen auf den Schritt des Leitens eines Ladestroms betreibbar ist.

**17.** Verfahren nach Anspruch 16, wobei der Ladestrom eine erste Größe, wenn die elektrische Last beleuchtet ist, und eine zweite Größe, wenn die elektrische Last nicht beleuchtet ist, aufweist.

**18.** Verfahren nach Anspruch 17, wobei die erste Größe wesentlich größer als die zweite Größe ist, sodass die beleuchtbare Zustandsanzeige (145; 245; 445) zum Beleuchten mit einem höheren Pegel, wenn die elektrische Last beleuchtet ist, als wenn die elektrische Last nicht beleuchtet ist, betreibbar ist, wobei die zweite Größe größer als null Ampere ist.

**19.** Verfahren nach Anspruch 18, wobei die zweite Größe im Wesentlichen null Ampere ist.

**Revendications**

**1.** Dispositif de commande de charge pour commander la quantité de puissance fournie à une charge électrique depuis une source de puissance CA, le dispositif de commande de charge comprenant :

un dispositif conducteur de manière à pouvoir être commandé (110) adapté à être raccordé entre la source de puissance CA et la charge électrique pour commander la quantité de puissance fournie à la charge électrique, le dispositif conducteur de manière à pouvoir être commandé ayant une entrée de commande ; un circuit de synchronisation (220 ; 320) adapté à être raccordé entre l'alimentation électrique CA et une charge d'éclairage (108), le circuit de synchronisation ayant une sortie pour fournir un signal de synchronisation ; un circuit de déclenchement (130 ; 330) raccordé de manière opérationnelle entre la sortie du circuit de synchronisation et l'entrée de commande du dispositif conducteur de manière à pouvoir être commandé, le circuit de déclenchement pouvant opérer pour conduire un courant de commande à travers l'entrée de commande en réponse au signal de synchronisation ; et un circuit indicateur de statut (140 ; 240 ; 440), dans lequel le circuit indicateur de statut peut opérer pour conduire le courant de commande et fournir une indication de statut en réponse à celui-ci, et dans lequel le circuit indicateur de statut comprend un indicateur de statut éclairable (145 ; 245 ; 445), dans lequel le circuit de synchronisation comprend une résistance de synchronisation (R20 ; R30) raccordée dans une connexion électrique en série à un condensateur de synchronisation (C20 ; C30), la combinaison en série de la résistance de synchronisation et du condensateur de synchronisation étant raccordée dans une connexion électrique parallèle au dispositif conducteur de manière à pouvoir être commandé (110), la sortie du circuit de synchronisation (220 ; 320) étant prévue à la jonction de la résistance de synchronisation et du condensateur de synchronisation ;
**caractérisé en ce que** le circuit indicateur de statut (140 ; 240 ; 440) est raccordé dans une connexion électrique en série au condensateur de synchronisation.

2. Dispositif de commande de charge selon la revendication 1, dans lequel l'indicateur de statut (145 ; 245 ; 445) est éclairé lorsque le dispositif de commande de charge fournit de la puissance à la charge et l'indicateur de statut est éclairé à un niveau faible lorsque le dispositif de commande de charge ne fournit pas de puissance à la charge.

3. Dispositif de commande de charge selon la revendication 2, dans lequel la charge électrique comprend une charge d'éclairage (108) ; et dans lequel l'indicateur de statut (145 ; 245 ; 445) est éclairé lorsque la charge d'éclairage est éclairée et l'indicateur de statut (145 ; 245 ; 445) est éclairé à un niveau faible lorsque la charge d'éclairage n'est pas éclairée.

4. Dispositif de commande de charge selon la revendication 2, comprenant en outre : un interrupteur mécanique (S10) raccordé dans une connexion électrique en série au dispositif conducteur de manière à pouvoir être commandé ; et une résistance (R24 ; R44) raccordée dans une connexion électrique parallèle à l'interrupteur mécanique pour permettre à l'indicateur de statut d'être éclairé à un niveau faible lorsque l'interrupteur mécanique est ouvert.

5. Dispositif de commande de charge selon la revendication 1, dans lequel l'indicateur de statut (145 ; 245 ; 445) est éclairé lorsque le dispositif de commande de charge fournit de la puissance à la charge et l'indicateur de statut n'est pas éclairé lorsque le dispositif de commande de charge ne fournit pas de puissance à la charge.

6. Dispositif de commande de charge selon la revendication 5, dans lequel la charge électrique comprend une charge d'éclairage (108) ; et dans lequel l'indicateur de statut est éclairé lorsque la charge d'éclairage est éclairée et l'indicateur de statut n'est pas éclairé lorsque la charge d'éclairage (108) n'est pas éclairée.

7. Dispositif de commande de charge selon la revendication 1, dans lequel le circuit indicateur de statut comprend en outre un pont redresseur (BR20) ayant des bornes CA raccordées dans une connexion électrique en série au condensateur de synchronisation (C20 ; C30) et des bornes CC raccordées dans une connexion électrique en série à l'indicateur de statut éclairable de sorte que l'indicateur de statut peut opérer pour s'éclairer lorsque le condensateur de synchronisation se charge et décharge.

8. Dispositif de commande de charge selon la revendication 7, dans lequel l'indicateur de statut peut opérer pour conduire quatre impulsions de courant au cours de chaque cycle linéaire de la source de puissance CA.

9. Dispositif de commande de charge selon la revendication 1, dans lequel le dispositif conducteur de manière à pouvoir être commandé comprend un interrupteur à semi-conducteur bidirectionnel (110).

10. Dispositif de commande de charge selon la revendication 9, dans lequel l'interrupteur à semi-conducteur bidirectionnel (110) comprend un triac.

11. Dispositif de commande de charge selon la revendication 10, comprenant en outre : un pont redresseur (BR20) ayant des bornes CA raccordées au circuit de synchronisation (220 ; 320) pour la réception du signal de synchronisation et des bornes CC raccordées dans une connexion électrique en série au circuit de déclenchement (130 ; 330) ; et un photocoupleur (350) ayant une entrée (355) raccordée dans une connexion électrique en série au circuit de déclenchement (130 ; 330) et une sortie raccordée à l'entrée de commande du triac de sorte que, lorsque le circuit de déclenchement et l'entrée du photocoupleur (350) conduisent le courant de commande, la sortie du photocoupleur peut opérer pour conduire un courant de portillon à travers l'entrée de commande du triac, rendant de ce fait le triac conducteur.

12. Dispositif de commande de charge selon la revendication 11, dans lequel le circuit indicateur de statut (140 ; 240 ; 440) comprend en outre un second pont redresseur (BR40) ayant des bornes CA raccordées dans une connexion électrique en série au condensateur de synchronisation et des bornes CC raccordées dans une connexion électrique en série à l'indicateur de statut éclairable de sorte que l'indicateur de statut peut opérer pour s'éclairer lorsque le condensateur de synchronisation se charge et décharge.

13. Dispositif de commande de charge selon la revendication 12, comprenant en outre : un circuit de limite de courant (360 ; 560) raccordé dans une connexion électrique en série au circuit de déclenchement (130 ; 330) et à l'entrée du photocoupleur (350), le circuit de limite de courant pouvant opérer pour limiter l'amplitude du courant de commande.

14. Dispositif de commande de charge selon la revendication 2, dans lequel l'indicateur de statut éclairable comprend une diode électroluminescente.

15. Procédé de fourniture d'un indicateur de statut éclairable sur un dispositif de commande de charge pour commander la quantité de puissance fournie à une charge électrique depuis une source de puissance CA, le procédé comprenant les étapes consistant à : raccorder un dispositif conducteur de manière à pouvoir être commandé (110) dans une connexion électrique en série entre la source de puissance CA et la charge électrique pour commander la puissance fournie à la charge électrique ; conduire un courant de charge à travers un condensateur de synchronisation ; conduire un courant de commande à travers un dispositif de déclenchement (130 ; 330) en réponse à l'étape consistant à conduire un courant de charge ; et conduire un courant de portillon à travers une entrée de commande du dispositif conducteur de manière à pouvoir être commandé en réponse à l'étape consistant à conduire un courant de commande fournissant un indicateur de statut éclairable (145 ; 245 ; 445) ; dans lequel l'indicateur de statut éclairable peut opérer pour s'éclairer en réponse à l'étape consistant à conduire le courant de commande, **caractérisé en ce que** l'étape consistant à conduire un courant de commande comprend conduire le courant de commande à travers le condensateur de synchronisation (C20 ; C30), le dispositif de déclenchement (130 ; 330) et l'indicateur de statut éclairable (145 ; 245 ; 445).

16. Procédé selon la revendication 15, dans lequel l'étape consistant à conduire un courant de charge comprend conduire le courant de charge à travers le condensateur de synchronisation (C20 ; C30) et l'indicateur de statut éclairable ; dans lequel l'indicateur de statut éclairable (145 ; 245 ; 445) peut opérer pour s'éclairer en réponse à l'étape consistant à conduire un courant de charge.

17. Procédé selon la revendication 16, dans lequel le courant de charge a une première amplitude lorsque la charge électrique est éclairée et une seconde amplitude lorsque la charge électrique n'est pas éclairée.

18. Procédé selon la revendication 17, dans lequel la première amplitude est essentiellement supérieure à la seconde amplitude de sorte que l'indicateur de statut éclairable (145 ; 245 ; 445) peut opérer pour s'éclairer à un niveau plus élevé lorsque la charge électrique est éclairée que lorsque la charge électrique n'est pas éclairée, dans lequel la seconde amplitude est supérieure à zéro ampère.

19. Procédé selon la revendication 18, dans lequel la seconde amplitude est essentiellement de zéro ampère.

Fig. 1

Fig. 2

Fig. 3

EP 1 883 912 B1

Fig. 4

Fig. 5

EP 1 883 912 B1

Fig. 6

EP 1 883 912 B1

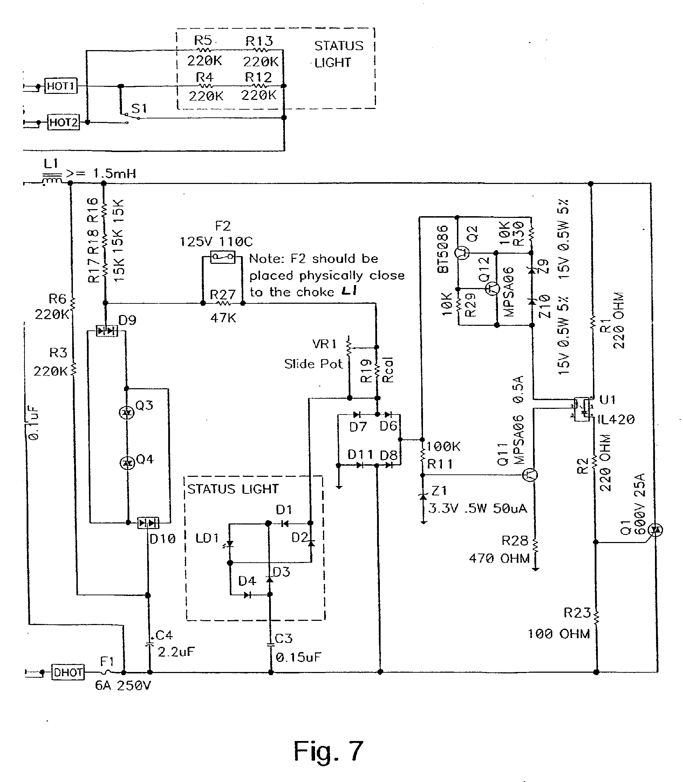

Fig. 7

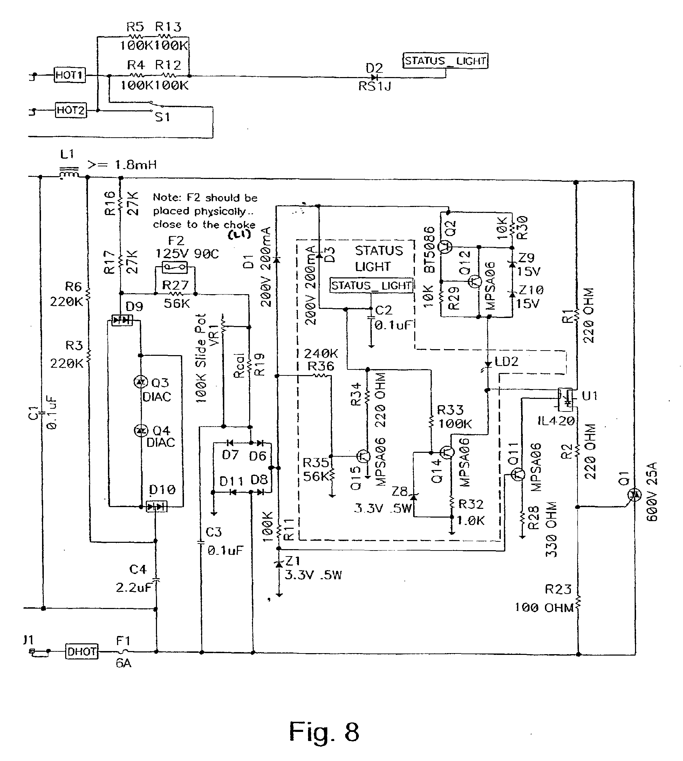

Fig. 8

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 68127605 P
- US 3864561 A
- US 5017837 A
- US 5248919 A
- US 5072095 A